# EUROPEAN PATENT SPECIFICATION

(11) **EP 4 386 713 B1**
(45) Date of publication and mention of the grant of the patent: **22.07.2026**
(21) Application number: 23210882.9
(22) Date of filing: 20.11.2023
(51) Int. Cl.: G08G 5/21, G08G 5/26, G08G 5/53, G01C 23/00, G08G 5/55

(54) **SYSTEMS AND METHODS FOR PERFORMING IMPACT ASSESSMENT OF AVIONIC PARAMATERS**
SYSTEME UND VERFAHREN ZUR DURCHFÜHRUNG DER AUSWIRKUNGSBEURTEILUNG VON AVIONIKPARAMATERN
SYSTÈMES ET PROCÉDÉS POUR EFFECTUER UNE ÉVALUATION D'IMPACT DE PARAMATERS AVIONIQUES

(30) Priority: 15.12.2022 IN 202211072580; 03.02.2023 US 202318164016
(43) Date of publication of application: 19.06.2024
(73) Proprietor: Honeywell International Inc., Charlotte, NC 28202 (US)
(72) Inventor: K S, Nitya, 28202, Charlotte (US); SELVARAJAN, Ravikumar, 28202, Charlotte (US); GOVINDILLAM, Sreenivasan, 28202, Charlotte (US)
(74) Representative: Ingrassia, Fisher & Lorenz UK Ltd.

(56) References cited:
- US-A1- 2010 030 401
- US-A1- 2020 168 104
- US-A1- 2022 013 022

## Description

### CROSS-REFERENCE TO RELATED APPLICATION

This application claims priority to India Provisional Patent Application No. 202211072580, filed December 15, 2022.

### TECHNICAL FIELD

The present invention generally relates to aircraft operations and more particularly relates to systems and methods for performing impact assessment of avionic parameters prior to incorporation of the avionic parameters into a flight p [0002a] Relevant prior art is disclosed in US 2020/168104 A1, US 2022/013022 A1 and US 2010/030401 A1.

### BACKGROUND

Aircraft flight plans are often impacted by external data, such as for example Open World System (OWS) data, that may be important to the safe and efficient completion of the flight. The external data may impact the current state of several avionic parameters. A crew member may have to manually navigate through multiple different displays that provide potentially disjointed perspectives of the impact of the external data on various avionic parameters. It may be time consuming and demanding for the crew member to navigate through the different displays manually to assess the impact of the external data on the flight plan prior to incorporation of the external data into the flight plan. In many instances, advisories associated with different avionic parameters impacted by the external data are displayed following the incorporation of the external data.

In some cases, the crew member may engage in a manual traversal of a waypoint list to navigate the impact of the external data on the flight plan. Runway analysis associated with the incorporation of the external data may span multiple tabs. Different perspectives, such as for example, a map view perspective, a lateral view perspective, and a perspective of the impact of the external data on different avionic parameters may not be available for viewing at the same time. The impact changes may not be graded in accordance with a criticality associated with the incorporation of the external data. This may result in the crew member potentially missing a violation of a critical functional limit associated with the incorporation of the external data into the flight plan.

Hence there is a need for systems and methods that are configured to present the impact of external data on avionic parameters in a manner that permits the crew member to quickly and efficiently assess the impact of the external data on a flight plan prior to incorporation of the external data into the current flight plan to generate an adjusted flight plan.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

An exemplary embodiment of a system includes a processor and a memory. The memory includes instructions that upon execution by the processor, cause the processor to: receive external data that impacts a plurality of primary avionic parameters associated with a flight plan; receive a current state of each of the plurality of primary avionic parameters from at least one avionic sub-system; generate an impact state of each of the plurality of primary avionic parameters based on an impact of the external data on the current state of the primary avionic parameter; generate a cockpit display including the impact state of at least one of the plurality of primary avionic parameters and a selectable impact detail option associated with each of the at least one of the plurality of primary avionic parameters; determine whether the selectable impact detail option associated with a first impact state of one of the at least one of the plurality of primary avionic parameter has been selected via an onboard input device; and generate an impact detail display associated with the first impact state of the one of the at least one of the plurality of primary avionic parameters based on the determination.

An exemplary embodiment of a method includes: receiving external data that impacts a plurality of primary avionic parameters associated with a flight plan; receiving a current state of each of the plurality of primary avionic parameters from at least one avionic sub-system; generating an impact state of each of the plurality of primary avionic parameters based on an impact of the external data on the current state of the primary avionic parameter; generating a cockpit display including the impact state of at least one of the plurality of primary avionic parameters and a selectable impact detail option associated with each of the at least one of the plurality of primary avionic parameters; determining whether the selectable impact detail option associated with a first impact state of one of the at least one of the plurality of primary avionic parameter has been selected via an onboard input device; and generating an impact detail display associated with the impact state of the one of the at least one of the plurality of primary avionic parameters based on the determination.

Furthermore, other desirable features and characteristics of the system and method for performing impact assessment of avionic parameters prior to incorporation of the avionic parameters into a flight plan will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 is a block diagram representation of a system for performing impact assessment of avionic parameters in accordance with an embodiment;
FIG. 2 is a block diagram representation of an aircraft including an embodiment of an impact assessment system;
FIG. 3 is a block diagram representation of an embodiment of an impact assessment system;
FIG. 4 is an illustration of an example of a navigable waypoint list display including impact states associated with a primary avionic parameter in accordance with an embodiment;
FIG. 5 is an illustration of an example of a tabular format of an impact detail display in accordance with an embodiment;
FIG. 6 is an illustration of an example of an impact detail display overlaying an interactive navigation (INAV) display in accordance with an embodiment; and
FIG. 7 is an illustration of an example of a vertical situational display (VSD) format of an impact detail display in accordance with an embodiment; and
FIG. 8 is a flowchart representation of an exemplary embodiment of a method of performing impact assessment of avionic parameters.

### DETAILED DESCRIPTION

The following detailed description is merely exemplary in nature. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

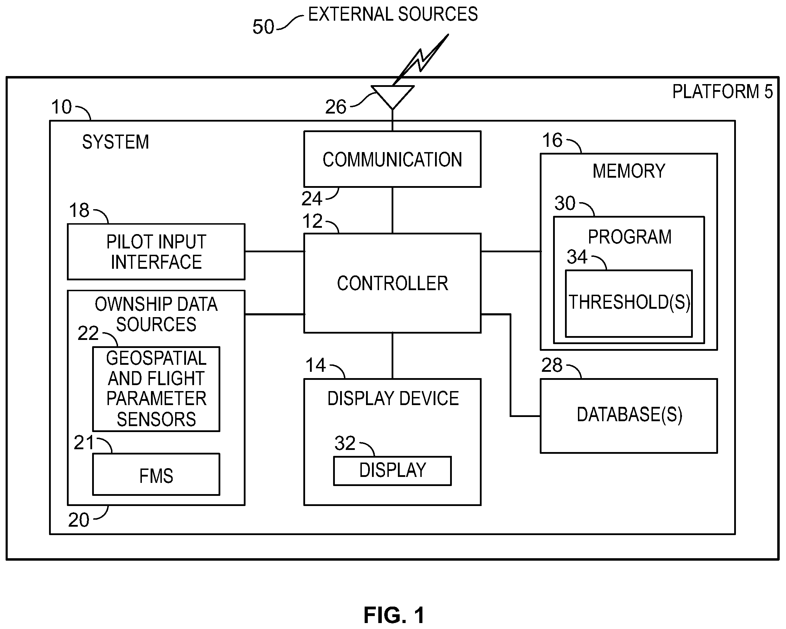

FIG. 1 is a block diagram representation of a system 10 for performing impact assessment of avionic impacted by external data prior to incorporation of the avionic parameters into a flight plan (shortened herein to "system" 10), as illustrated in accordance with an exemplary and non-limiting embodiment of the present disclosure. The system 10 may be utilized onboard a mobile platform 5, as described herein. In various embodiments, the mobile platform is an aircraft, which carries or is equipped with the system 10. As schematically depicted in FIG. 1, the system 10 includes the following components or subsystems, each of which may assume the form of a single device or multiple interconnected devices: a controller circuit 12 operationally coupled to: at least one display device 14; computer-readable storage media or memory 16; an optional input interface 18, and ownship data sources 20 including, for example, a flight management system (FMS) 21 and an array of flight system state and geospatial sensors 22.

In various embodiments, the system 10 may be separate from or integrated within: the flight management system (FMS) 21 and/or a flight control system (FCS). Although schematically illustrated in FIG. 1 as a single unit, the individual elements and components of the system 10 can be implemented in a distributed manner utilizing any practical number of physically distinct and operatively interconnected pieces of hardware or equipment. When the system 10 is utilized as described herein, the various components of the system 10 will typically all be located onboard the mobile platform 5.

The term "controller circuit" (and its simplification, "controller"), broadly encompasses those components utilized to carry-out or otherwise support the processing functionalities of the system 10. Accordingly, the controller circuit 12 can encompass or may be associated with a programmable logic array, application specific integrated circuit or other similar firmware, as well as any number of individual processors, flight control computers, navigational equipment pieces, computer-readable memories (including or in addition to the memory 16), power supplies, storage devices, interface cards, and other standardized components. In various embodiments, the controller circuit 12 embodies one or more processors operationally coupled to data storage having stored therein at least one firmware or software program (generally, computer-readable instructions that embody an algorithm) for carrying-out the various process tasks, calculations, and control/display functions described herein. During operation, the controller circuit 12 may be programmed with and execute the at least one firmware or software program, for example, a program 30, that embodies an algorithm described herein for receiving and processing data for performing impact assessment of avionic parameters on a mobile platform 5, where the mobile platform 5 is an aircraft, and to accordingly perform the various process steps, tasks, calculations, and control/display functions described herein.

The controller circuit 12 may exchange data, including real-time wireless data, with one or more external sources 50 to support operation of the system 10 in embodiments. In this case, bidirectional wireless data exchange may occur over a communications network, such as a public or private network implemented in accordance with Transmission Control Protocol/Internet Protocol architectures or other conventional protocol standards. Encryption and mutual authentication techniques may be applied, as appropriate, to ensure data security.

The memory 16 is a data storage that can encompass any number and type of storage media suitable for storing computer-readable code or instructions, such as the aforementioned software program 30, as well as other data generally supporting the operation of the system 10. The memory 16 may also store one or more threshold 34 values, for use by an algorithm embodied in software program 30. One or more database(s) 28 are another form of storage media; they may be integrated with memory 16 or separate from it.

In various embodiments, aircraft-specific parameters and information for an aircraft may be stored in the memory 16 or in a database 28 and referenced by the program 30. Non-limiting examples of aircraft-specific information includes an aircraft weight and dimensions, performance capabilities, configuration options, and the like.

In various embodiments, two- or three-dimensional map data may be stored in a database 28, including airport features data, geographical (terrain), buildings, bridges, and other structures, street maps, and navigational databases, which may be updated on a periodic or iterative basis to ensure data timeliness. This map data may be uploaded into the database 28 at an initialization step and then periodically updated, as directed by either a program 30 update or by an externally triggered update.

Flight parameter sensors and geospatial sensors 22 supply various types of data or measurements to the controller circuit 12 during an aircraft flight. In various embodiments, the geospatial sensors 22 supply, without limitation, one or more of: inertial reference system measurements providing a location, Flight Path Angle (FPA) measurements, airspeed data, groundspeed data (including groundspeed direction), vertical speed data, vertical acceleration data, altitude data, attitude data including pitch data and roll measurements, yaw data, heading information, sensed atmospheric conditions data (including wind speed and direction data), flight path data, flight track data, radar altitude data, and geometric altitude data.

With continued reference to FIG. 1, the display device 14 can include any number and type of image generating devices on which one or more avionic displays 32 may be produced. When the system 10 is utilized for a manned aircraft, the display device 14 may be affixed to the static structure of the Aircraft cockpit as, for example, a Head Down Display (HDD) or Head Up Display (HUD) unit. In various embodiments, the display device 14 may assume the form of a movable display device (e.g., a pilot-worn display device) or a portable display device, such as an Electronic Flight Bag (EFB), a laptop, or a tablet computer carried into the aircraft cockpit by a pilot.

At least one avionic display 32 is generated on the display device 14 during operation of the system 10; the term "avionic display" is synonymous with the term "aircraft-related display" and "cockpit display" and encompasses displays generated in textual, graphical, cartographical, and other formats. The system 10 can generate various types of lateral and vertical avionic displays 32 on which map views and symbology, text annunciations, and other graphics pertaining to flight planning are presented for a pilot to view. The display device 14 is configured to continuously render at least a lateral display showing the aircraft at its current location within the map data. The avionic display 32 generated and controlled by the system 10 can include graphical user interface (GUI) objects and alphanumerical input displays of the type commonly presented on the screens of multifunction control display units (MCDUs), as well as Control Display Units (CDUs) generally. Specifically, embodiments of the avionic displays 32 include one or more two-dimensional (2D) avionic displays, such as a horizontal (i.e., lateral) navigation display or vertical navigation display (i.e., vertical situation display VSD); and/or on one or more three dimensional (3D) avionic displays, such as a Primary Flight Display (PFD) or an exocentric 3D avionic display.

In various embodiments, a human-machine interface is implemented as an integration of a pilot input interface 18 and a display device 14. In various embodiments, the display device 14 is a touch screen display. In various embodiments, the human-machine interface also includes a separate pilot input interface 18 (such as a keyboard, cursor control device, voice input device, or the like), generally operationally coupled to the display device 14. Via various display and graphics systems processes, the controller circuit 12 may command and control a touch screen display device 14 to generate a variety of graphical user interface (GUI) objects or elements described herein, including, for example, buttons, sliders, and the like, which are used to prompt a user to interact with the human-machine interface to provide user input; and for the controller circuit 12 to activate respective functions and provide user feedback, responsive to received user input at the GUI element.

In various embodiments, the system 10 may also include a dedicated communications circuit 24 configured to provide a real-time bidirectional wired and/or wireless data exchange for the controller 12 to communicate with the external sources 50 (including, each of: traffic, air traffic control (ATC), satellite weather sources, ground stations, and the like). In various embodiments, the communications circuit 24 may include a public or private network implemented in accordance with Transmission Control Protocol/Internet Protocol architectures and/or other conventional protocol standards. Encryption and mutual authentication techniques may be applied, as appropriate, to ensure data security. In some embodiments, the communications circuit 24 is integrated within the controller circuit 12, and in other embodiments, the communications circuit 24 is external to the controller circuit 12. When the external source 50 is "traffic," the communications circuit 24 may incorporate software and/or hardware for communication protocols as needed for traffic collision avoidance (TCAS), automatic dependent surveillance broadcast (ADSB), and enhanced vision systems (EVS).

In certain embodiments of the system 10, the controller circuit 12 and the other components of the system 10 may be integrated within or cooperate with any number and type of systems commonly deployed onboard an aircraft including, for example, an FMS 21.

The disclosed algorithm is embodied in a hardware program or software program (e.g. program 30 in controller circuit 12) and configured to operate when the aircraft is in any phase of flight. The algorithm enables a pilot to perform impact assessment of avionic parameters impacted by external data prior to incorporation of the avionic parameters into a flight plan in an aircraft.

In various embodiments, the provided controller circuit 12, and therefore its program 30 may incorporate the programming instructions for: receiving external data that impacts a plurality of primary avionic parameters associated with a flight plan; receiving a current state of each of the plurality of primary avionic parameters from at least one avionic sub-system; generating an impact state of each of the plurality of primary avionic parameters based on an impact of the external data on the current state of the primary avionic parameter; generating a cockpit display comprising the impact state of at least one of the plurality of primary avionic parameters and a selectable impact detail option associated with each of the at least one of the plurality of primary avionic parameters; determining whether the selectable impact detail option associated with one of the at least one of the plurality of primary avionic parameters has been selected via an onboard input device; and generating an impact detail display associated with the one of the at least one of the plurality of primary avionic parameters based on the determination.

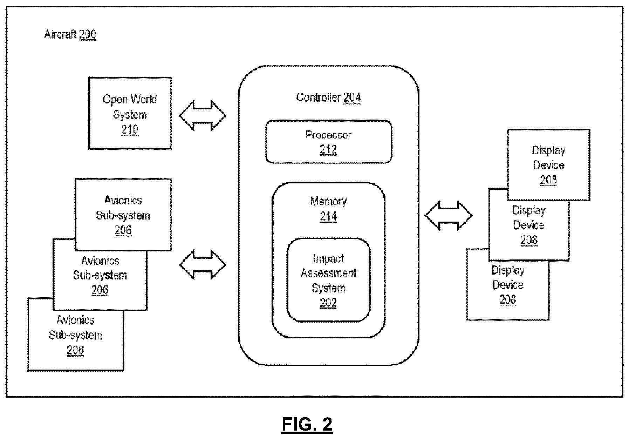

Referring to FIG. 2, a block diagram representation of an aircraft 200 including an embodiment of an impact assessment system 202 is shown. In an embodiment, the aircraft 200 includes a controller 204, a plurality of avionic sub-systems 206, one or more display devices 208 and, one or more Open World Systems (OWS) 210. The controller 204 includes a processor 212 and a memory 214. The memory 214 includes an embodiment of the impact assessment system 202. The aircraft 200 may include additional components, including those detailed with respect to FIG. 1, that facilitate operation of the aircraft 200.

The controller 204 is communicatively coupled to the avionic sub-systems 206 and to the display devices 208. The controller 204 configured to be communicatively coupled to the one or more OWS 210. Examples of OWS 210 include, but are not limited to, a datalink system, an electronic flight bag (EFB), and other types of external devices.

The impact assessment system 202 is configured to receive external data from an external device. In an embodiment, the impact assessment system 202 is configured to receive OWS data from an OWS 210. The external data impacts a plurality of primary avionic parameters associated with a flight plan of the aircraft 200. Examples of primary avionic parameters include, but are not limited to, flight path change, fuel remaining, fuel required, aircraft position, aircraft speed, rate of descent, estimated time of arrival (ETA), aircraft weight, and aircraft altitude.

The impact assessment system 202 is configured to receive a current state of each primary avionic parameter from at least one avionic sub-system 206. Examples of avionic sub-systems 206 include one or more ownership data sources 20. The impact assessment system 202 is configured to generate an impact state of each of the primary avionic parameters based on an impact of the external data on the current state of the primary avionic parameter.

The impact assessment system 202 is configured to generate a cockpit display for display on a display device 208 including the impact state of each of the primary avionic parameters and a selectable impact detail option associated with the impact state of each of the primary avionic parameters. In an embodiment, the impact assessment system 202 is configured to generate a cockpit display of a portion of a flight plan for display on a display device 208. The portion of the flight plan includes the impact state of the primary avionic parameters associated with the portion of the flight plan. The cockpit display includes a selectable impact detail option associated with the impact state of each of the primary avionic parameters associated with the displayed portion of a flight plan.

In an embodiment, the cockpit display is a scrollable flight plan display. In an embodiment, as a pilot scrolls through the scrollable flight plan display on one display device 208, the impact assessment system 202 is configured to generate a portion of a map display (for example an INAV display) and a vertical situation display (VSD) for display on one or more display devices 208 that corresponds to the displayed portion of the flight plan on the scrollable flight plan display.

In an embodiment, the cockpit display is a navigable waypoint list display. In an embodiment, as a pilot scrolls through the navigable waypoint list display on one display device 208, the impact assessment system 202 is configured to generate a portion of a map display (for example an INAV display) and a VSD for display on one or more display devices 208 that corresponds to the displayed portion of the flight plan on the navigable waypoint list display.

The cockpit display includes a selectable impact detail option associated with the impact state of each of the primary avionic parameters. The impact assessment system 202 is configured to determine whether a selectable impact detail option associated with an impact state of one of the primary avionic parameters has been selected from the cockpit display via an onboard input device. If the impact assessment system 202 determines that a selectable impact detail option associated with the impact state of one of the primary avionic parameters has been selected, the impact assessment system 202 is configured to generate an impact detail display associated the impact state of the primary avionic parameter. In an embodiment, the impact detail display is overlayed on at least one cockpit display

In an embodiment, when the selectable impact detail option associated with an impact state of a primary avionic parameter is selected from a navigable waypoint list display associated with the flight plan, the impact assessment system 202 is configured to generate an impact detail display associated with the selected impact state associated with the primary avionic parameter. In an embodiment, the impact assessment system 202 is configured to generate an impact detail display having a tabular format. In an embodiment, the impact assessment system 202 is configured to overlay the impact detail display on a map display corresponding to a displayed portion of the flight plan on the cockpit display. In an embodiment, the impact detail display is formatted as a zoom-in window. In an embodiment, the impact assessment system 202 is configured to generate an impact detail display having a vertical situation display (VSD) format. The impact assessment system 202 may generate one or more of the different forms of impact detail displays described above.

In an embodiment, the impact detail display includes an impact state of at least one secondary avionic parameter associated with the impact state of a primary avionic parameter. Examples of secondary avionic parameters include, but are not limited to, fuel remaining, fuel required, aircraft position, aircraft speed, rate of descent, estimated time of arrival (ETA), aircraft weight, and aircraft altitude.

In an embodiment, the impact assessment system 202 is configured to generate the cockpit display to include an activation option associated with the external data. The impact assessment system 202 determines whether the activation option has been selected via an onboard input device. If the impact assessment system 202 determines that the activation option has been selected, the impact assessment system 202 is configured to incorporate the external data into the flight plan. The impact assessment system 202 is configured to display one or both of the current state and the impact state of the primary avionic parameters prior to incorporation of the external data associated with the primary avionic parameters.

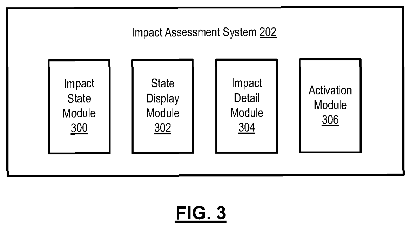

Referring to FIG. 3, a block diagram representation of an embodiment of an impact assessment system 202 is shown. In an embodiment, the impact assessment system 202 includes an impact state module 300, a state display module 302, an impact detail module 304, and an activation module 306. In alternative embodiments, the impact assessment system 202 may include additional components that facilitate operation of the impact assessment system 202.

The impact state module 300 is configured to receive external data from an external device. In an embodiment, the impact state module 300 is configured to receive OWS data from an OWS 210. Examples of OWS 210 include, but are not limited to, datalink systems, electronic flight bags (EFB), and other external devices. The external data impacts a plurality of primary avionic parameters associated with a flight plan of the aircraft 200. Examples of primary avionic parameters include, but are not limited to, flight path change, fuel remaining, fuel required, aircraft position, aircraft speed, rate of descent, ETA, aircraft weight, and aircraft altitude.

The impact state module 300 is configured to receive a current state of each primary avionic parameter from at least one avionic sub-system 206. Examples of avionic sub-systems 206 include one or more ownership data sources 20. The impact assessment system 202 is configured to generate an impact state of each of the primary avionic parameters based on an impact of the external data on the current state of the primary avionic parameter.

In an embodiment, the impact state module 300 is configured to categorize the impact state of each primary avionic parameter as a routine impact state or a critical impact state. The impact state module 300 is configured to compare the impact state of each primary avionic parameter with a critical impact state threshold associated with that primary avionic parameter to determine whether the impact state of the primary avionic parameter is a critical impact state.

The impact state module 300 is configured to identify a plurality of secondary avionic parameters. Each secondary avionic parameter is associated with an impact state of a primary avionic parameter. Examples of secondary avionic parameters include, but are not limited to, fuel remaining, fuel required, aircraft position, aircraft speed, rate of descent, ETA, aircraft weight, and aircraft altitude. The impact state module 300 is configured to receive a current state of each secondary avionic parameter from at least one avionic sub-system 206. Examples of avionic sub-systems 206 include one or more ownership data sources 20. The impact state module 300 is configured to generate an impact state of each of the secondary avionic parameters based on the current state of the secondary avionic parameter and the impact state of the associated primary avionic parameter.

In an embodiment, the impact state module 300 is configured to categorize the impact state of each secondary avionic parameter as a routine impact state or a critical impact state. The impact state module 300 is configured to compare the impact state of each secondary avionic parameter with a critical impact state threshold associated with that secondary avionic parameter to determine whether the impact state of the secondary avionic parameter is a critical impact state.

The state display module 302 is configured to generate a cockpit display for display on a display device 208. The cockpit display includes the impact state of the primary avionic parameters and a selectable impact detail option associated with the impact state of each of the primary avionic parameters. In an embodiment, the state display module 302 is configured to format the impact state of the primary avionic parameters in a different format than the format of the current state other avionic parameters displayed on the cockpit display.

In an embodiment, the state display module 302 is configured to display the critical impact states in a format that is different from the format used to display the routine impact states. In an embodiment the state display module 302 is configured to display the critical impact states in a first color and the routine impact states in a second color. The state display module 302 is configured to transmit the generated cockpit display to a display device 208.

In an embodiment, the state display module 302 is configured to generate a cockpit display of a portion of a flight plan for display on a display device 208 and to transmit the generated cockpit display to the display device 208. The portion of the flight plan includes the impact state of the primary avionic parameters associated with the portion of the flight plan. The cockpit display includes a selectable impact detail option associated with the impact state of each of the primary avionic parameters associated with the displayed portion of a flight plan.

In an embodiment, the state display module 302 is configured to generate the cockpit display as a navigable flight plan display. In an embodiment, the state display module 302 is configured to generate the cockpit display as a scrollable flight plan display. In an embodiment, as a pilot scrolls through the scrollable flight plan display on one display device 208, the state display module 302 is configured to generate a portion of a map display (for example an INAV display) and a vertical situation display (VSD) for display on one or more display devices 208 that corresponds to the displayed portion of the flight plan on the scrollable flight plan display.

In an embodiment, the state display module 302 is configured to generate the cockpit display as a navigable waypoint list display. In an embodiment, as a pilot scrolls through the navigable waypoint list display on one display device 208, the state display module 302 is configured to generate a portion of a map display (for example an INAV display) and a VSD for display on one or more display devices 208 that corresponds to the displayed portion of the flight plan on the navigable waypoint list display.

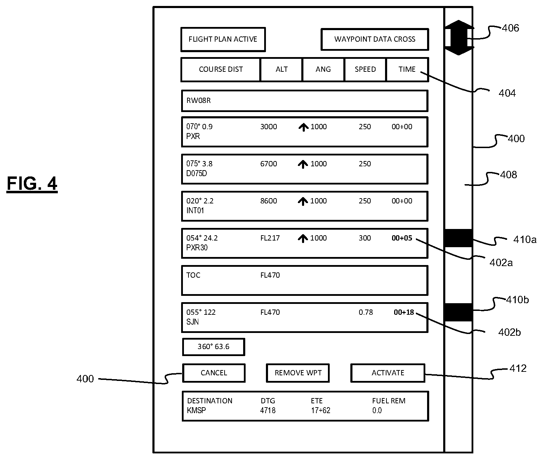

Referring to FIG. 4, an illustration of an example of a navigable waypoint list display 400 including an example of impact states 402a, 402b associated with a primary avionic parameter 404 in accordance with an embodiment is shown. The navigable waypoint list display 400 includes a list of waypoints in a portion of a flight plan and avionic parameters associated with the different waypoints. The primary avionic parameter impacted by OWS data received from an OWS 212 in the displayed portion of the flight plan is the ETA 404 at two of the waypoints PXR30, SJN. More specifically, the primary avionic parameter ETA 404 associated with the waypoint PXR30 has an impact state of 00+05 and the primary avionic parameter ETA 404 associated with the waypoint SJN has an impact state of 00+18. The impact states 402 of the primary avionic parameters are presented in a bold font while the current states of the other avionic parameters are presented in a normal unbolded font.

The navigable waypoint list display 400 includes a scroll arrow 406 that enables a pilot to scroll through different portions of the flight plan. This enables the pilot to view the impact states of different primary avionics parameters during different portions of the flight plan. As a pilot scrolls through the navigable waypoint list display 400 on one display device 208, a map display (for example an INAV display) and/or a vertical situation display (VSD) is displayed on one or more display devices 208 that corresponds to the displayed portion of the flight plan on the navigable waypoint list display 400.

The navigable waypoint list display 400 includes an impact panel 408. The impact panel 408 includes selectable impact detail options 410 associated with the impact state of each of the displayed primary avionic parameters. A pilot is provided with the option of selecting a selectable impact detail option 410 associated with an impact state of a primary avionic parameter 404 to generate an impact detail display. The navigable waypoint list display 400 includes an activation option 412 associated with the received OWS data. Selection of the activation option 412 causes the OWS data to be incorporated into the flight plan. The navigable waypoint list display 400 includes a cancel option 414 associated with the received OWS data. Selection of the cancel option 414 cancels the incorporation of the OWS data into the flight plan and maintains the original flight plan.

Referring back to FIG. 3, in an embodiment, the impact detail module 304 is configured to determine whether a selectable impact detail option associated with an impact state of one of the primary avionic parameters associated with a waypoint in a flight plan has been selected via an onboard input device. If the impact detail module 304 determines that a selectable impact detail option associated with an impact state of one of the primary avionic parameters associated with a waypoint in a flight plan has been selected, the impact detail module 304 is configured to generate an impact detail display associated with the impact state of the primary avionic parameter.

The selectable impact option is associated with an impact state of a primary avionic parameter associated with a waypoint in the flight plan. In an embodiment, the impact detail module 304 is configured to generate an impact detail display in a table format. The impact detail display includes a plurality of avionic parameters associated with the waypoint and a current state of each of the plurality of avionic parameters. The avionic parameters include the primary avionic parameter and the secondary avionic parameters associated with the primary avionic parameter. The impact detail display includes the current state and the impact state of the primary avionic parameter as well as the current state and the impact state of the secondary avionic parameters associated with the primary avionic parameter. The impact state of the secondary avionic parameters is based on the current state of the secondary avionic parameter and the impact state of the primary avionic parameter.

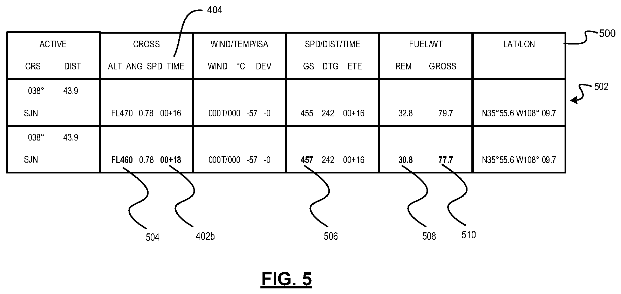

Referring to FIG. 5, an illustration of an example of an impact detail display 500 having a tabular format in accordance with an embodiment is shown. The impact detail module 304 generated the impact detail display 500 in response to the selection of the selectable impact detail option 410b associated with the impact state 402b of the primary avionic parameter 404 in FIG. 4. The impact state 402b is associated with the waypoint SJN. The impact detail display 500 includes a first row with the current state 502 of each of a plurality of avionic parameters associated with the waypoint SJN. The plurality of avionic parameters includes the primary avionic parameter and the secondary avionic parameters. The impact display 500 includes a second row that includes the impact state 402b of the primary avionic parameter 404 and the impact states 504, 506, 508, 510 of a plurality of secondary avionic parameters ALT, GS, REM, GROSS. The impact states 402b, 504, 506, 508, 510 of the primary avionic parameter and the plurality of secondary avionic parameters are bolded.

Referring back to FIG. 3, in an embodiment, the impact detail module 304 is configured to generate an impact detail display to overlay a map display (such as for example an INAV display) of the portion of the flight plan displayed on the navigable flight plan display. In an embodiment, the impact detail display is formatted in a zoom-in window display. The selectable impact option is associated with the impact state of the primary avionic parameter. The primary avionic parameter is associated with the waypoint in the flight plan. The impact detail display includes the impact state of the primary avionic parameter and the impact state of each of a plurality of secondary avionic parameters associated with the primary avionic parameter.

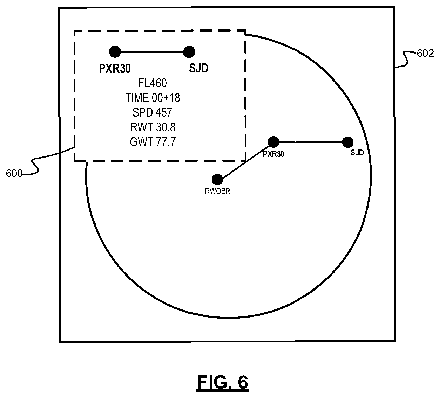

Referring to FIG. 6, an illustration of an example of an impact detail display 600 overlaying an INAV display 602 of the portion of the flight plan displayed on navigable waypoint list display 400 accordance with an embodiment is shown. The impact detail module 304 generated the impact detail display 600 in response to the selection of the selectable impact detail option 410b associated with the impact state 402b of the primary avionic parameter 404 in FIG. 4. The impact state 402b is associated with the waypoint SJN.

The impact detail display 600 includes the impact state of the primary avionic parameter and the impact states of the plurality of secondary avionic parameters associated with the primary avionic parameter. In the example, the primary avionic parameter is the ETA at the waypoint SJN and the impact state of the primary avionic parameter is 00+18. The secondary avionic parameters associated with the impact state of the primary avionic parameter are aircraft altitude, aircraft speed (SPD), remaining fuel weight (RWT) and gross fuel weight (GWT). The impact state of the aircraft altitude is FL460. The impact state of the aircraft speed is 457. The impact state of the remaining fuel weight is 30.8. The impact state of the gross fuel weight is 77.7. The impact state of the secondary avionic parameters are based the current state of the secondary avionic parameter and the impact state of the primary avionic parameter.

Referring back to FIG. 3, in an embodiment, the impact detail module 304 is configured to generate a VSD format of an impact detail display including the secondary avionic parameters that are available for display in the VSD format. An example of an available secondary avionic parameter is aircraft altitude. The selectable impact option is associated with the impact state of the primary avionic parameter. The primary avionic parameter is associated with the waypoint in the flight plan. If the aircraft altitude is a secondary avionic parameter associated with the impact state of the primary avionic parameter, the impact detail module 304 is configured to display the current state and the impact state of the aircraft altitude on the VSD format of the impact detail display

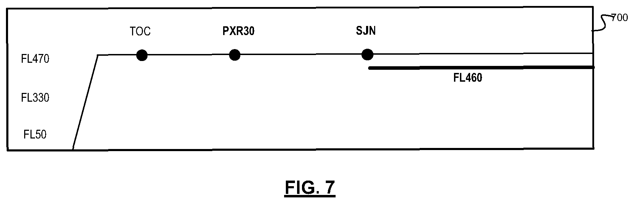

Referring to FIG. 7, an illustration of an example of a VSD format of an impact detail display 700 in accordance with an embodiment is shown. The impact detail module 304 generated the VSD format of the impact detail display 700 in response to the selection of the selectable impact detail option 410b associated with the impact state 402b of the primary avionic parameter TIME 404 in FIG. 4. The impact state 402b is associated with the waypoint SJN.

The aircraft altitude is a secondary avionic parameter associated with the impact state of the primary avionic parameter at the waypoint SJN. The primary avionic parameter is the ETA at the waypoint SJN. The impact state of the primary avionic parameter is 00+18. The secondary avionic parameter associated with the impact state of the primary avionic parameter is aircraft altitude. The VSD format of the impact detail display 700 includes the current state and the impact state of the aircraft altitude. The current state of the aircraft altitude is FL470 and the impact state of the aircraft altitude is FL470.

Referring back to FIG. 3, the impact detail module 304 may generate one or more of an impact detail display in a table format, an impact detail display overlaying a map display (such as for example an INAV display), and a VSD format of the impact detail display for display on one or more display devices 208.

The state display module 302 is configured to generate the navigable flight plan display to include an activation option associated with the external data. The activation module 306 is configured to determine whether the activation option has been selected via an onboard input device. If the activation module 306 determines that the activation option has been selected, the activation module 306 is configured to incorporate the external data into the current flight plan to generate an adjusted flight plan.

The state display module 302 is configured to generate the navigable flight plan display to include an cancel option associated with the external data. The activation module 306 is configured to determine whether the cancel option has been selected via an onboard input device. If the activation module 306 determines that the cancel option has been selected, the activation module 306 is configured to discard the external data and maintain the current flight plan.

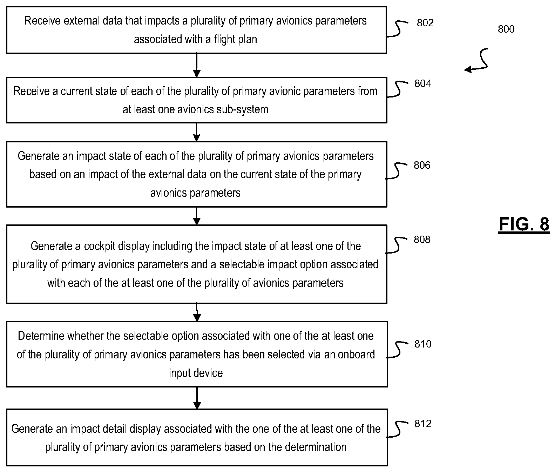

Referring to FIG. 8, a flowchart representation of an exemplary embodiment of a method 800 of performing impact assessment of avionic parameters is shown. At 802, external data that impacts a plurality of primary avionic parameters associated with a flight plan is received. At 804, a current state of each of the plurality of primary avionic parameters is received from at least one avionic sub-system. At 806, an impact state of each of the plurality of primary avionic parameters is generated based on an impact of the external data on the current state of the primary avionic parameter. At 808, a cockpit display including the impact state of at least one of the plurality of primary avionic parameters and a selectable impact detail option associated with each of the at least one of the plurality of primary avionic parameters is generated. At 810, a determination is made regarding whether the selectable impact detail option associated with one of the at least one of the plurality of primary avionic parameters has been selected via an onboard input device. At 812, an impact detail display associated with the one of the at least one of the plurality of primary avionic parameters is generated based on the determination.

Displaying the impact of external data on one or more avionic parameters prior to incorporation of the external data into the flight plan may provide a number of technical advantages. Providing a navigable waypoint list including the impact states of different avionic parameters and selectable impact detail options associated with each of the impact states may enable a crew member to scroll through the flight plan and quickly assess the impact of the external data on avionic parameters. The simultaneous presentation of the portion of the flight plan displayed on the navigable waypoint list on a map display and/or a VSD display may facilitate assessment of the impact of the external data.

In addition, providing one or more different impact detail displays of the impact states of avionic parameters associated with the incorporation of external data may enable a crew member to quickly assess whether to incorporate the external data into the flight plan. Providing multiple different perspectives of the impact detail displays, such as for example in a tabular format, overlaying a map display and/or in a VSD format, at the same time may enable a crew member to efficiently assess the impact of the incorporation of the external data into the flight plan. This may decrease the chances of crew member error associated with an assessment of the impact of incorporating of external data into a flight plan and increase the flight safety.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system comprising:
a processor; and
a memory (16), the memory comprising instructions that upon execution by the processor, cause the processor to:
receive external data that impacts a plurality of primary avionic parameters associated with a flight plan;
receive a current state of each of the plurality of primary avionic parameters from at least one avionic sub-system;
generate an impact state of each of the plurality of primary avionic parameters based on an impact of the external data on the current state of the primary avionic parameter;
generate a cockpit display comprising the impact state of at least one of the plurality of primary avionic parameters and a selectable impact detail option (410a, 410b) associated with the impact state of each of the at least one of the plurality of primary avionic parameters, wherein the cockpit display comprises a scrollable flight plan display having a navigable waypoint list display (400) associated with at least a portion of the flight plan comprising a scroll arrow (406) for scrolling through different portions of a flight plan, and an impact panel (408) comprising the selectable impact detail option;
determine whether the selectable impact detail option associated with a first impact state of one of the at least one of the plurality of primary avionic parameters has been selected via an onboard input device; and
generate an impact detail display associated with the first impact state of the one of the at least one of the plurality of primary avionic parameters based on the determination.

2. The system of claim 1, wherein the cockpit display further comprises an activation option associated with the external data, the selection of the activation option being operable to incorporate the external data into the flight plan.

3. The system of claim **1,** wherein navigating through the navigable waypoint list display generates at least one of a map display and a vertical situation display (VSD) that corresponds to the portion of the flight plan displayed on the navigable waypoint list display.

4. The system of claim 1, wherein the external data comprises open world system (OWS) data and is received via at least one of a datalink system, an electronic flight bag (EFB), and an external device.

5. The system of claim **1,** wherein each primary avionic parameter comprises at least one of a flight path change, fuel remaining, fuel required, aircraft position, aircraft speed, rate of descent, estimated time of arrival (ETA), aircraft weight, and aircraft altitude.

6. The system of claim 1, wherein the impact detail display has a tabular format.

7. The system of claim 1, wherein the impact detail display is overlayed on a map display corresponding to a displayed portion of the flight plan on the cockpit display.

8. The system of claim 7, wherein the impact detail display is formatted as a zoom-in window.

9. The system of claim 1, wherein the impact detail display has a vertical situation display (VSD) format.

10. The system of claim 1, wherein the first impact state of a first primary avionic parameter comprises a routine impact state and is displayed in a first format and a second impact state of a second primary avionic parameter comprises a critical impact state and is displayed in a second format, the plurality of primary avionic parameters comprising the first and second primary avionic parameters.

11. The system of claim 1, wherein the cockpit display comprising the impact state of at least one of the plurality of primary avionic parameters and the associated selectable impact detail option and is displayed prior to incorporation of the external data into the flight plan.

12. The system of claim 1, wherein the impact detail display comprises an impact state of at least one secondary avionic parameter, the impact state of the at least one secondary avionic parameter being based on a current state of the secondary avionic parameter and associated with the one of the at least one of the plurality of primary avionic parameters.

13. The system of claim 12, wherein the at least one secondary avionic parameter comprises at least one of fuel remaining, fuel required, aircraft position, aircraft speed, rate of descent, estimated time of arrival (ETA), aircraft weight, and aircraft altitude.

14. A method comprising:
receiving external data that impacts a plurality of primary avionic parameters associated with a flight plan;
receiving a current state of each of the plurality of primary avionic parameters from at least one avionic sub-system;
generating an impact state of each of the plurality of primary avionic parameters based on an impact of the external data on the current state of the primary avionic parameter;
generating a cockpit display comprising the impact state of at least one of the plurality of primary avionic parameters and a selectable impact detail option associated with each of the at least one of the plurality of primary avionic parameters, wherein the cockpit display comprises a scrollable flight plan display having a navigable waypoint list display (400) associated with at least a portion of the flight plan comprising a scroll arrow (406) for scrolling through different portions of a flight plan, and an impact panel (408) comprising the selectable impact detail option;
determining whether the selectable impact detail option associated with first impact state of one of the at least one of the plurality of primary avionic parameters has been selected via an onboard input device; and
generating an impact detail display associated with the first impact state of one of the at least one of the plurality of primary avionic parameters based on the determination.

## Patentansprüche

1. System, umfassend:
einen Prozessor; und
einen Speicher (16), wobei der Speicher Anweisungen umfasst, die bei Ausführung durch den Prozessor, den Prozessor dazu veranlassen:
externe Daten zu empfangen, die sich auf eine Vielzahl von primären Avionikparametern, die einem Flugplan zugehörig sind, auswirken;
einen aktuellen Zustand jedes der Vielzahl von primären Avionikparametern von mindestens einem Avionikuntersystem zu empfangen;
einen Auswirkungszustand jedes der Vielzahl von primären Avionikparametern auf Basis einer Auswirkung der externen Daten auf den aktuellen Zustand des primären Avionikparameters zu erzeugen;
eine Cockpitanzeige zu erzeugen, umfassend den Auswirkungszustand mindestens eines der Vielzahl von primären Avionikparametern und eine auswählbare Auswirkungsdetailoption (410a, 410b), die dem Auswirkungszustand jedes des mindestens einen der Vielzahl von primären Avionikparametern zugehörig ist, wobei die Cockpitanzeige eine scrollbare Flugplananzeige umfasst, die eine navigierbare Wegpunktlistenanzeige (400) aufweist, die mindestens einem Teil des Flugplans zugehörig ist, umfassend einen Scrollpfeil (406) zum Scrollen durch unterschiedliche Teile eines Flugplans und ein Auswirkungsbedienfeld (408), umfassend die auswählbare Auswirkungsdetailoption;
zu bestimmen, ob die auswählbare Auswirkungsdetailoption, die einem ersten Auswirkungszustand eines des mindestens einen der Vielzahl von primären Avionikparametern zugehörig ist, über eine bordeigene Eingabevorrichtung ausgewählt wurde; und
auf Basis der Bestimmung eine Auswirkungsdetailanzeige zu erzeugen, die dem ersten Auswirkungszustand des einen des mindestens einen der Vielzahl von primären Avionikparametern zugehörig ist.

2. System nach Anspruch 1, wobei die Cockpitanzeige ferner eine Aktivierungsoption umfasst, die den externen Daten zugehörig ist, wobei die Auswahl der Aktivierungsoption dazu betriebsfähig ist, die externen Daten in den Flugplan zu integrieren.

3. System nach Anspruch 1, wobei das Navigieren durch die navigierbare Wegpunktlistenanzeige mindestens eine von einer Kartenanzeige und einer vertikalen Situationsanzeige (VSD) erzeugt, die dem Teil des auf der navigierbaren Wegpunktlistenanzeige angezeigten Flugplans entspricht.

4. System nach Anspruch 1, wobei die externen Daten Open-World-System-(OWS-)Daten umfassen und über mindestens eines von einem Datenlinksystem, einem Electronic Flight Bag (EFB) und einer externen Vorrichtung empfangen werden.

5. System nach Anspruch 1, wobei jeder primäre Avionikparameter mindestens eines von einer Flugpfadänderung, einem verbleibenden Kraftstoff, einem benötigten Kraftstoff, einer Flugzeugposition, einer Flugzeuggeschwindigkeit, einer Sinkrate, einer geschätzten Ankunftszeit (ETA), einem Flugzeuggewicht und einer Flugzeughöhe umfasst.

6. System nach Anspruch 1, wobei die Auswirkungsdetailanzeige ein Tabellenformat aufweist.

7. System nach Anspruch 1, wobei die Auswirkungsdetailanzeige auf einer Kartenanzeige überlagert ist, die einem angezeigten Teil des Flugplans auf der Cockpitanzeige entspricht.

8. System nach Anspruch 7, wobei die Auswirkungsdetailanzeige als ein Fenster zum Heranzoomen formatiert ist.

9. System nach Anspruch **1,** wobei die Auswirkungsdetailanzeige ein Format einer vertikalen Situationsanzeige (VSD) aufweist.

10. System nach Anspruch 1, wobei der erste Auswirkungszustand eines ersten primären Avionikparameters einen routinemäßigen Auswirkungszustand umfasst und in einem ersten Format angezeigt wird und ein zweiter Auswirkungszustand eines zweiten primären Avionikparameters einen kritischen Auswirkungszustand umfasst und in einem zweiten Format angezeigt wird, wobei die Vielzahl von primären Avionikparametern den ersten und den zweiten primären Avionikparameter umfassen.

11. System nach Anspruch 1, wobei die Cockpitanzeige den Auswirkungszustand von mindestens einem aus der Vielzahl von primären Avionikparametern und die zugehörige auswählbare Auswirkungsdetailoption umfasst und vor der Integration der externen Daten in den Flugplan angezeigt wird.

12. System nach Anspruch 1, wobei die Auswirkungsdetailanzeige einen Auswirkungszustand mindestens eines sekundären Avionikparameters umfasst, wobei der Auswirkungszustand des mindestens einen sekundären Avionikparameters auf einem aktuellen Zustand des sekundären Avionikparameters basiert und dem einen des mindestens einen der Vielzahl von primären Avionikparametern zugehörig ist.

13. System nach Anspruch 12, wobei der mindestens eine sekundäre Avionikparameter mindestens eines von einem verbleibenden Kraftstoff, einem benötigten Kraftstoff, einer Flugzeugposition, einer Flugzeuggeschwindigkeit, einer Sinkrate, einer geschätzten Ankunftszeit (ETA), einem Flugzeuggewicht und einer Flugzeughöhe umfasst.

14. Verfahren, umfassend:
Empfangen von externen Daten, die sich auf eine Vielzahl von primären Avionikparametern, die einem Flugplan zugehörig sind, auswirken;
Empfangen eines aktuellen Zustands jedes der Vielzahl von primären Avionikparametern von mindestens einem Avionikuntersystem;
Erzeugen eines Auswirkungszustands jedes der Vielzahl von primären Avionikparametern auf Basis einer Auswirkung der externen Daten auf den aktuellen Zustand des primären Avionikparameters;
Erzeugen einer Cockpitanzeige, umfassend den Auswirkungszustand mindestens eines der Vielzahl von primären Avionikparametern und eine auswählbare Auswirkungsdetailoption, die jedem des mindestens einen der Vielzahl von primären Avionikparametern zugehörig ist, wobei die Cockpitanzeige eine scrollbare Flugplananzeige umfasst, die eine navigierbare Wegpunktlistenanzeige (400) aufweist, die mindestens einem Teil des Flugplans zugehörig ist, umfassend einen Scrollpfeil (406) zum Scrollen durch unterschiedliche Teile eines Flugplans und ein Auswirkungsbedienfeld (408), umfassend die auswählbare Auswirkungsdetailoption;
Bestimmen, ob die auswählbare Auswirkungsdetailoption, die einem ersten Auswirkungszustand eines des mindestens einen der Vielzahl von primären Avionikparametern zugehörig ist, über eine bordeigene Eingabevorrichtung ausgewählt wurde; und
Erzeugen, auf Basis der Bestimmung, einer Auswirkungsdetailanzeige, die dem ersten Auswirkungszustand eines des mindestens einen der Vielzahl von primären Avionikparametern zugehörig ist.

## Revendications

1. Système comprenant :
un processeur ; et
une mémoire (16), la mémoire comprenant des instructions qui, après exécution par le processeur, amènent le processeur à :
recevoir des données externes qui influencent une pluralité de paramètres avioniques primaires associés à un plan de vol ;
recevoir un état actuel de chacun de la pluralité de paramètres avioniques primaires à partir d'au moins un sous-système avionique ;
générer un état d'influence de chacun de la pluralité de paramètres avioniques primaires sur la base d'une influence des données externes sur l'état actuel du paramètre avionique primaire ;
générer un affichage de cockpit comprenant l'état d'influence d'au moins l'un de la pluralité de paramètres avioniques primaires et d'une option de détail d'influence sélectionnable (410a, 410b) associée à l'état d'influence de chacun de l'au moins un de la pluralité de paramètres avioniques primaires, dans lequel l'affichage de cockpit comprend un affichage de plan de vol déroulable présentant un affichage de liste de points de trajet navigable (400) associé à au moins une partie du plan de vol comprenant une flèche de défilement (406) pour défiler à travers différentes parties d'un plan de vol, et un panneau d'influence (408) comprenant l'option de détail d'influence sélectionnable ;
déterminer si l'option de détail d'influence sélectionnable associée à un premier état d'influence d'un de l'au moins un de la pluralité de paramètres avioniques primaires a été sélectionnée par l'intermédiaire d'un dispositif d'entrée intégré ; et
générer un affichage de détail d'influence associé au premier état d'influence de l'un de l'au moins un de la pluralité de paramètres avioniques primaires sur la base de la détermination.

2. Système selon la revendication 1, dans lequel l'affichage de cockpit comprend en outre une option d'activation associée aux données externes, la sélection de l'option d'activation étant utilisable pour incorporer les données externes au plan de vol.

3. Système selon la revendication 1, dans lequel la navigation à travers l'affichage de liste de points de trajet navigable génère au moins l'un d'un affichage de carte et d'un affichage de situation verticale (VSD) qui correspond à la partie du plan de vol affichée sur l'affichage de liste de points de trajet navigable.

4. Système selon la revendication 1, dans lequel les données externes comprennent des données de système mondial ouvert (OWS), et sont reçues par l'intermédiaire d'au moins l'un d'un système de liaison de données, d'un sac de vol électronique (EFB), et d'un dispositif externe.

5. Système selon la revendication 1, dans lequel chaque paramètre avionique primaire comprend au moins l'un d'un changement de trajectoire de vol, d'un carburant restant, d'un carburant requis, d'une position d'aéronef, d'une vitesse d'aéronef, d'un taux de descente, d'un temps d'arrivée estimé (ETA), d'un poids d'aéronef et d'une altitude d'aéronef.

6. Système selon la revendication 1, dans lequel l'affichage de détail d'influence présente un format tabulaire.

7. Système selon la revendication 1, dans lequel l'affichage de détail d'influence est superposé sur un affichage de carte correspondant à une partie affichée du plan de vol sur l'affichage de cockpit.

8. Système selon la revendication 7, dans lequel l'affichage de détail d'influence est formaté comme une fenêtre de zoom avant.

9. Système selon la revendication 1, dans lequel l'affichage de détail d'influence présente un format d'affichage de situation verticale (VSD).

10. Système selon la revendication 1, dans lequel un premier état d'influence d'un premier paramètre avionique primaire comprend un état d'influence de routine et est affiché dans un premier format et un deuxième état d'influence d'un deuxième paramètre avionique primaire comprend un état d'influence critique et est affiché dans un deuxième format, la pluralité de paramètres avioniques primaires comprenant le premier et le deuxième paramètres avioniques primaires.

11. Système selon la revendication 1, dans lequel l'affichage de cockpit comprend l'état d'influence d'au moins l'un de la pluralité de paramètres avioniques primaires et de l'option de détail d'influence sélectionnable associée et est affiché antérieurement à l'incorporation des données externes au plan de vol.

12. Système de la revendication 1, dans lequel l'affichage de détail d'influence comprend un état d'influence d'au moins un paramètre avionique secondaire, l'état d'influence de l'au moins un paramètre avionique secondaire étant basé sur un état actuel du paramètre avionique secondaire et associé à l'un de l'au moins un de la pluralité de paramètres avioniques primaires.

13. Système selon la revendication 12, dans lequel l'au moins un paramètre avionique secondaire comprend au moins l'un d'un carburant restant, d'un carburant requis, d'une position d'aéronef, d'une vitesse d'aéronef, d'un taux de descente, d'un temps d'arrivée estimé (ETA), d'un poids d'aéronef et d'une altitude d'aéronef.

14. Procédé comprenant :
la réception de données externes qui influencent une pluralité de paramètres avioniques primaires associés à un plan de vol ;
la réception d'un état actuel de chacun de la pluralité de paramètres avioniques primaires à partir d'au moins un sous-système avionique ;
la génération d'un état d'influence de chacun de la pluralité de paramètres avioniques primaires sur la base d'une influence des données externes sur l'état actuel du paramètre avionique primaire ;
la génération d'un affichage de cockpit comprenant l'état d'influence d'au moins un de la pluralité de paramètres avioniques primaires et d'une option de détail d'influence sélectionnable associée à chacun de l'au moins un de la pluralité de paramètres avioniques primaires, dans lequel l'affichage de cockpit comprend un affichage de plan de vol déroulable présentant un affichage de liste de points de trajet navigable (400) associé à au moins une partie du plan de vol comprenant une flèche de défilement (406) pour défiler à travers différentes parties d'un plan de vol, et un panneau d'influence (408) comprenant l'option de détail d'influence sélectionnable ;
la détermination du fait que l'option de détail d'influence sélectionnable associée à un premier état d'influence d'un de l'au moins un de la pluralité de paramètres avioniques primaires a été sélectionnée par l'intermédiaire d'un dispositif d'entrée intégré ; et
la génération d'un affichage de détail d'influence associé au premier état d'influence d'un de l'au moins un de la pluralité de paramètres avioniques primaires sur la base de la détermination.
